**Europäisches Patentamt**

**European Patent Office**

**Office européen des brevets**

(11) Veröffentlichungsnummer: **0 036 024**
**A1**

(12) **EUROPÄISCHE PATENTANMELDUNG**

(21) Anmeldenummer: **80100952.3**

(22) Anmeldetag: **26.02.80**

(51) Int. Cl.³: **B 29 F 3/02**
**B 29 B 1/10, B 01 F 7/08**

(43) Veröffentlichungstag der Anmeldung:
**23.09.81 Patentblatt 81/38**

(84) Benannte Vertragsstaaten:
**AT CH FR GB IT**

(71) Anmelder: **Gneuss, Detlef**
**Keplerstrasse 5**
**D-8590 Marktredwitz(DE)**

(71) Anmelder: **Hörl, Dieter**
**Rodesgrün 56**
**D-8671 Selbitz(DE)**

(72) Erfinder: **Gneuss, Detlef**
**Keplerstrasse 5**
**D-8590 Marktredwitz(DE)**

(72) Erfinder: **Hörl, Dieter**
**Rodesgrün 56**
**D-8671 Selbitz(DE)**

(54) **Schneckenpresse.**

(57) Bei einer Schnecke (1), welche durch ihre Charakteristik im Zusammenwirken mit der Wärmezuführung über den Schneckenzylinder ein schonendes Plastifizieren verschiedener Kunststoffmaterialien ohne das Auswechseln der Schnecke ermöglicht, hat der Querschnitt des Schneckenkernes in der Misch- und Förderzone (2) durchgehend bis zur Schneckenspitze (13) die Form eines zentrisch um den Drehpunkt angeordneten, kreisförmigen, abgeflachte Eckbereiche aufweisenden Mehrecks (12) mit von den Eckbereichen zu den Mittelbereichen der Seitenflanken zunehmenden Gangtiefen. Die Einzugzone (3) ist mit der Misch- und Förderzone durch einen kurzen Übergangsbereich (4) zwischen zylindrischem und mehreckigem Querschnitt des Schneckenkernes verbunden.

./...

EP 0 036 024 A1

Croydon Printing Company Ltd.

Fig. 1

Fig. 3

Die Erfindung bezieht sich auf eine Schnecke zum Fördern und Verarbeiten von Kunststoffschmelzen, wobei sich die Schnecke in einer Extrusionsmaschine befindet.

Es ist bekannt, daß Kunststoffmaterialien mit einem Einschneckenextruder verarbeitet werden können indem sich zwecks Förderung und Plastifizierung eine zylindrische Schnecke befindet. Diese Schnecken besitzen im allgemeinen einen zylindrischen Kern auf dem sich eine spiralförmige Förderwendel befindet. Bei Betrachtung der Schnecke in ihrer Längsachse setzt sich die Schnecke üblicherweise aus drei verschiedenen Zonen zusammen und zwar einer Einzugszone, einer Kompressionszone und einer Plastifizier- und Ausstoßzone. Dies muß aber nicht so sein, denn hier gibt es die verschiedensten Variationen in der Gestaltung einzelner Details wie z.B. Kern, Förderwendel usw. Bekannt und im Handel erhältlich ist eine Vielzahl solcher Sondertypen.

All diese Schnecken haben aber eine gemeinsame Zielsetzung, sie versuchen auf irgendeine Art einen bestimmten Kunststoff optimal zu plastifizieren, d.h. mit einem möglichst geringen Anteil an Scherkraft eine gut plastifizierte und homogene Schmelze zu erreichen.

Dies gelingt einigen Sondertypen bei bestimmten Kunststoffen auch recht gut, kann aber nicht oder nur mit einem erneut hohen Aufwand auf andere Kunststofftypen oder Extrudergrößen übertragen werden. Bisher galt es deshalb als nicht lösbares Problem, mit einer Schneckengeometrie die meisten Kunststofftypen verarbeiten zu können, und diese Geometrie auch problemlos auf andere Maschinengrößen übertragen zu können.

Bei Versuchen mit einem bekannten Schneckensonderbautyp wurde nun eine überraschende Entdeckung gemacht. Wenn man eine handelsübliche Extruderschnecke im Einzug mit einem zylindrischen Kernquerschnitt versieht und durch einen kurzen Übergangsbereich auf einen polygonalen Kernquerschnitt überwechselt und dieser Kernquerschnitt eine spezielle geometrische Größenordnung aufweist, so ergibt sich in diesem Bereich ein überraschender Kneteffekt, welcher zu einer, an bisherigen Maßstäben gemessen, optimalen Schmelzequalität in Güte und Homogenität führt. Weiterhin ist diese Schneckengeometrie für die meisten Kunststoffe einsetzbar und auch für andere Extrudergrößen problemlos zu übertragen.

Die Erfindung hat sich die Aufgabe gestellt, die Geometrie einer Schnecke anzugeben, welche durch ihre Charakteristik im Zusammenwirken mit der Wärmezuführung über den Schneckenzylinder ein schonendes Plastifizieren verschiedener Kunststoffmaterialien ohne das Auswechseln der Schnecke zu ermöglichen.

Erfindungsgemäß wird dazu vorgeschlagen, daß in den Gängen der Misch- und Förderzone der Querschnitt des Schneckenkernes durchgehend bis zur Schneckenspitze in Form eines zentrisch um den Drehpunkt angeordneten, kreisförmigen, abgeflachte Eckbereiche aufweisenden Mehrecks mit von den Eckbereichen zu den Mittelbereichen der Seitenflanken zunehmenden Gangtiefen gestaltet ist, und daß die Einzugszone mit der Misch- und Förderzone durch einen kurzen Übergangsbereich zwischen zylindrischem und kreisförmigen Querschnitt des Schneckenkernes verbunden ist.

In einer Ausführungsform der Schneckengemetrie kann das kreisförmige Mehreck die Form einer Ellipse aufweisen. In einer anderen Ausführungsform kann das Mehreck in Form
eines Dreiecks gestaltet sein. Es ist ferner möglich, dem
kreisförmigen Mehreck die Form eines Vierecks zu geben.
In jedem Fall muß dafür Sorge getragen werden, daß der
Schneckenkern in der Einzugszone einen kreisförmigen Querschnitt aufweist.

Der Vorteil dieser Schnecke wird darin gesehen, daß die
Schnecke kompressionslos arbeitet und das Kunststoffmaterial an der Zylinderwand ausknetet. Der überraschende
Kneteffekt, welcher nur in einem speziellen Bereich zwischen max. und min. Schneckenkernradius auftritt, führt zu
einer intensiven aber schonenden Verwirblung der Kunststoffmassen. Die Funktionstüchtigkeit ist in diesem speziellen
Bereich materialunabhängig. sodaß fast alle Kunststoffmaterialien hierin gleich gut verarbeitet werden können.
Durch die Drehbewegung der Schnecke rotieren die zwischen
Schneckenkern und Schneckenzylinder gebildeten Kammern und
führen damit zu einem kontinuierlichen Knetvorgang, in
welchem der Kneter, nämlich der Schneckenkern, durch seine
zentrisch um den Drehpunkt angeordnete Geometrie ständig
im Gleichgewicht der Kräfte gehalten ist, welche an den Knetpunkten verursacht werden. Anders ausgedrückt ist die Schnecke
durch ihre zentrische Gestaltung während des Betriebes immer
schwimmend gelagert und weist somit trotz der entstehenden
Knetkräfte den geringst möglichen Verschleiß auf.

Durch entsprechende Temepraturführung am Schneckenzylinder
kann die erfinderische Schnecke in ihren Verarbeitungseigenschaften verschiedenen Rohstofftypen angepaßt werden,
daß bedeutet, man kann ohne Schneckenwechsel die meisten
Kunststoffmaterialien optimal verarbeiten. Umrüstkosten,
Kosten für zusätzliche Schnecken und diffizile Einstellarbeiten entfallen. Wesentlich ist ferner, daß aufgrund der
vorgegebenen Schneckengeometrie der Schneckendruck vor der Schnecke nur noch von geringer Bedeutung für die Plastifiziergüte des aufbereiteten Material ist, wodurch der im
Austragungsbereich auftretende Verschleiß reduziert wird.

In der Zeichnung ist ein Ausführungsbeispiel der erfindungsgemäßen Schnecke schematisch dargestellt; es zeigen:

Fig. 1 - Die Schnecke in Gesamtansicht

Fig. 2 - Einen Schnitt durch den Einzugsbereich der Schnecke

Fig. 3 - Einen Schnitt durch den Übergangsbereich von der
         Einzugszone zur Misch- und Förderzone

Fig. 4 - Einen Schnitt durch den Misch- und Förderbereich.

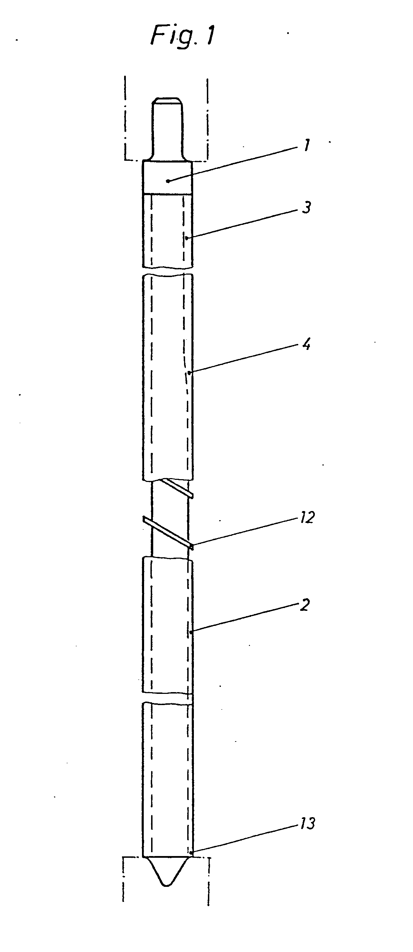

Fig. 1 zeigt die Schnecke (1) mit dem Einzugsbereich (3), dem
Übergangsbereich (4) zwischen Einzugsbereich und Misch- und
Förderbereich sowie den Misch- und Förderbereich (2) in Gesamtdarstellung. Die Zeichnung zeigt im Teilschnitt den
Förderwendel (12), welcher längs durchlaufend vom Einzugsbereich 3 bis zur Schneckenspitze 13 auf dem Schneckenkern
(11) angeordnet ist.

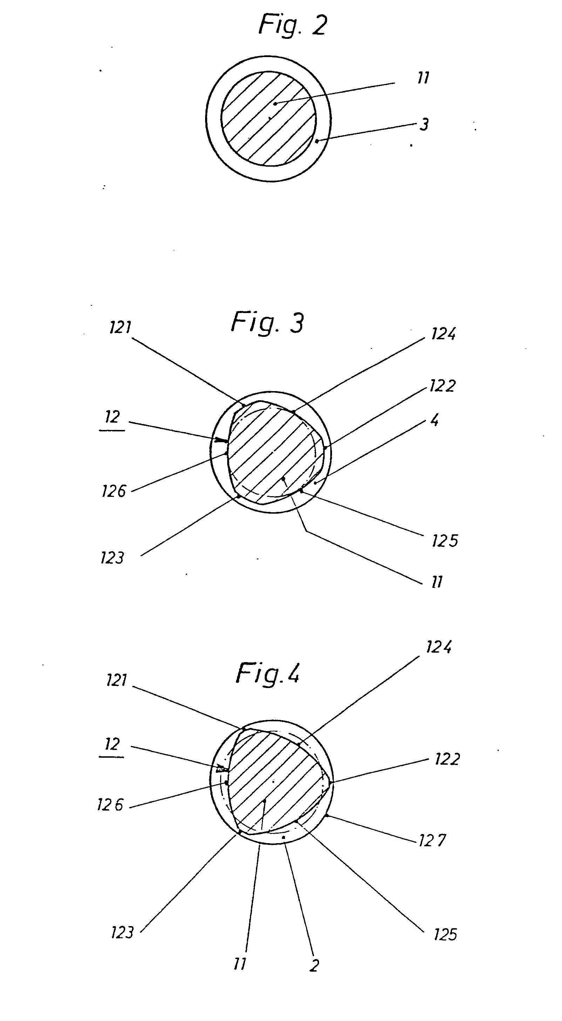

Fig. 2 zeigt einen Schnitt durch den Einzugsbereich (3) mit
dem in diesem Bereich zylindrischen Schneckenkern (11).

Fig. 3 zeigt den Übergangsbereich 4 zwischen dem Einzugsbereich 3 und dem Misch- und Förderbereich 2. Der Schneckenkern (11) weist in dieser Darstellungsart die Form eines
Mehrecks (12) mit drei stark abgeflachten Eckbereichen (121,
122, 123) auf. Die Gangtiefe zwischen diesen Eckbereichen
(121, 122, 123) und den Mittelbereichen (124, 125, 126) der
Seitenflanken weist in diesem Übergangsbereich nur geringe
Unterschiede auf. Das aufzubereitende Material wird durch

diesen Übergangsbereich (4) von der reinen Einzugszone (3) in
die Knet- und Austragszone (2) übergeführt.

Fig. 4 zeigt die eingentliche Knet- und Austragszone (2) in
der Schneckengeometrie. Die gewählte Darstellungsform
baut auf der Darstellung der Fig. 3 auf und zeigt eine
dreieckförmige Gestaltung des Schneckenkernes (11).

Die größten Stellen des Schneckenkernes (11), also die abgeflachten Eckbereiche (12, 122, 123) sind bei dieser Darstellungsart spitzer gehalten, und müssen einen bestimmten
Abstand zur Oberkante der Förderwendel (127) haben, was bedeutet, daß gegenüber dem Übergangsbereich 4 die Gangtiefen in den abgeflachten Eckbereichen (121, 122, 123)
niedriger gehalten sind als im Übergangsbereich. Die
kleinsten Stellen des Schneckenkernes (11), also die Mittelbereiche (124, 125, 126) müssen ebenfalls einen bestimmten
Abstand zur Oberkante der Förderwendel (127) haben. Nur wenn
die kleinste und größte Stelle des Schneckenkerns sich in
einem bestimmten Bereich befinden, tritt der überraschende
Kneteffekt auf, welcher zu einer schonenden und optimalen
Plastifizierung führt.

- Patentansprüche -

1. Schneckenstrangpresse mit in einem Zylinder angeordneter Förderschnecke zum kontinuierlichem Aufbereiten von organischen, plastischen, insbesondere thermoplastischen Massen, die eine Einzugszone und eine Misch- und Austragszone mit einer längs durchlaufenden, zylindrischen Förderwendel und deren Schneckenkern nach der Einzugszone und einem kurzen Übergangsbereich eine polygonale Querschnittsform aufweist, dadurch gekennzeichnet, daß der kleinste Abstand zwischen dem Außendurchmesser der Förderwendel (127) und der Stelle größter Abmessung des polygonalen Schneckenkerns (121, 122, 123) nicht kleiner als 2 mm aber auch nicht größer als 6,7 % des Schneckenaußendurchmessers ist, und daß der größte Abstand zwischen dem Außendurchmesser der Förderwendel (127) und der Stelle kleinster Abmessung des polygonalen Schneckenkerns (124, 125, 126) nicht kleiner als 1o % aber auch nicht größer als 22 % des Schneckenaußendurchmessers ist.

2. Schneckenstrangpresse nach Anspr-uch 1 dadurch gekennzeichnet, daß der kleinste Abstand zwischen dem Außendurchmesser der Förderwendel (127) und der Stelle größter Abmessung des polygonalen Schneckenkerns (121, 122, 123) nicht kleiner als 1,8 mm aber auch nicht größer als 7,2 % des Schneckenaußendurchmessers ist, und daß der größte Abstand zwischen dem Außendurchmesser der Förderwendel (127) und der Stelle kleinster Abmessung des polygonalen Schneckenkerns (124,125, 126) nicht kleiner als 9 % aber auch nicht größer als 24 % des Schneckenaußendurchmessers ist.

3. Schneckenstrangpresse nach Anspruch 1 dadurch gekennzeichnet, daß der kleinste Abstand zwischen dem Außendurchmesser der Förderwendel (127) und der Stelle größter Abmessung des polygonalen Schneckenkerns (121, 122 123) nicht kleiner als 1,6 mm aber auch nicht größer als 7,7 % des Schneckenaußendurchmessers ist, und daß der größte Abstand zwischen dem Außendurchmesser der Förderwendel (127) und der Stelle kleinster Abmessung des polygonalen Schneckenkerns (124, 125, 126) nicht kleiner als 8 % aber auch nicht größer als 26 % des Schneckenaußendurchmessers ist.

4. Schneckenstrangpresse nach Anspruch 1 dadurch gekennzeichnet, daß der Schneckenkern (11) die Querschnittsform einer Ellipse aufweist.

5. Schneckenstrangpresse nach Anspruch 1 dadurch gekennzeichnet, daß der Schneckenkern (11) die Querschnittsform eines Dreiecks aufweist.

6. Schneckenstrangpresse nach Anspruch 1 dadurch gekennzeichnet, daß der Schneckenkern (11) die Querschnittsform eines Vierecks aufweist.

½

Fig. 1

Fig. 2

Fig. 3

Fig.4

))) Europäisches
Patentamt

**EUROPÄISCHER RECHERCHENBERICHT**

Nummer der Anmeldung

EP 80 10 0952.3

| | EINSCHLÄGIGE DOKUMENTE | | | KLASSIFIKATION DER ANMELDUNG (Int.Cl.3) |
|---|---|---|---|---|
| Kategorie | Kennzeichnung des Dokuments mit Angabe, soweit erforderlich, der maßgeblichen Teile | betrifft Anspruch | | |
| | DE - B - 1 038 532 (W. ELLERMANN) <br> * Fig. 6 * <br> -- | 1,4 | | B 29 F 3/02 <br> B 29 B 1/10 <br> B 01 F 7/08 |
| | DE - A - 1 529 826 (COMPAGNIE FRANÇAISE THOMSON HOOUSTON-HOTCHKISS BRANDT) <br> * Fig. 10 bis 13 * <br> -- | 1,5,6 | | |
| | FR - A1 - 2 265 524 (SOCIETE D'ETUDE ET DE CONTRUCTION DE MACHINES SCOMAC) <br> * Fig. 1 * <br> -- | 1 | | **RECHERCHIERTE SACHGEBIETE (Int. Cl.3)** |
| | US - A - 3 897 937 (A.P. LIMBACH) <br> * Fig. 2 bis 6 * <br> -- | 1 | | B 01 F 7/08 |
| A | DD - A - 99 532 (VEB LEUNA-WERKE) <br> * Fig. 3, 4 * <br> -- | | | B 29 B 1/10 <br> B 29 F 3/02 |
| A | DE - B - 2 152 644 (RHEINSTAHL AG.) <br> * Fig. 1, 2 * <br> -- | | | |
| A | DE - A1 - 2 516 376 (MITSUBISHI JUKOGYO K.K.) <br> * Fig. 4 * <br> ---- | | | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Berlin | 13-11-1980 | BITTNER |

EPA form 1503.1 06.78